# EUROPÄISCHE PATENTSCHRIFT

(11) **EP 0 536 530 B1**
(45) Veröffentlichungstag und Bekanntmachung des Hinweises auf die Patenterteilung: **12.06.1996**
(21) Anmeldenummer: 92114960.5
(22) Anmeldetag: 02.09.1992
(51) Int. Cl.: B08B 9/42, B65G 17/06, B65G 17/32

(54) **Flaschenwaschmaschine**
Bottle washing machine
Machine de lavage de bouteilles

(30) Priorität: 11.09.1991 DE 4130154
(43) Veröffentlichungstag der Anmeldung: 14.04.1993
(73) Patentinhaber: ORTMANN + HERBST Maschinen- und Anlagenbau GmbH, D-22309 Hamburg (DE)
(72) Erfinder: Grot, Uwe, Dipl.-Ing., W-2000 Hamburg 65 (DE)
(74) Vertreter: Schaefer, Konrad, Dipl.-Phys.

(56) Entgegenhaltungen:
- DE-A- 1 901 833
- US-A- 1 644 515
- PATENT ABSTRACTS OF JAPAN vol. 10, no. 216 (M-502)(2272) 29. Juli 1986; & JP-A-61 55 011 (DAINIPPON PRINTING CO LTD) 19. März 1986

## Beschreibung

Die Erfindung bezieht sich auf eine Flaschenwaschmaschine nach dem Oberbegriff des Anspruches 1. Eine derartige Vorrichtung ist beispielsweise aus DE-A-1901833 bekannt.

In herkömmlichen Flaschenwaschmaschinen werden die zu reinigenden Flaschen in Flaschenkörben aufgenommen und diese Flaschenkörbe mittels eines Transportelementes den einzelnen Reinigungszonen zugeführt. Das Transportelement besteht aus zwei parallel geführten Ketten, die synchron angetrieben werden. Die in der Regel langgestreckten Flaschenkörbe sind quer zur Transportrichtung zwischen den Ketten angeordnet und daran befestigt. Eine derartige Konstruktion ist insbesondere für Flaschenkörbe ausgelegt, die ein hohes Gewicht aufweisen. Dieses Gewicht kann einerseits auf die Anzahl, andererseits aber auch auf das Material der in dem Flaschenkorb aufgenommenen Flaschen zurückzuführen sein. Insbesondere Glasflaschen, die bislang hauptsächlich in gängigen Flaschenwaschmaschinen gereinigt werden, sind relativ schwer.

In letzter Zeit wird jedoch verstärkt dazu übergegangen, Produkte auf Kunststoffmehrwegflaschen abzufüllen. Die in der Regel aus Polyäthylentherephtalat (PET) bestehenden Kunststoffflaschen sind deutlich leichter als Glasflaschen. Ihre Reinigung kann zwar wie die von Glasflaschen in gängigen Flaschenwaschmaschinen erfolgen. Diese Flaschenwaschmaschinen sind jedoch, da sie auf wesentlich höhere Gewichte ausgelegt sind, konstruktiv relativ aufwendig und unökonomisch zu betreiben.

Aufgabe der vorliegenden Erfindung ist es daher, eine insbesondere an Kunststoffflaschen angepaßte Flaschenwaschmaschine bereitzustellen.

Gelöst wird diese Aufgabe durch die kennzeichnenden Merkmale des Anspruches 1.

Im Prinzip läuft diese Lösung darauf hinaus, daß anstelle des bisherigen zweisträngigen Transportelementes nur noch ein bewegter Strang vorgesehen ist. Die Flaschenaufnahmen sind mit ihrem einen Ende an dem Strang befestigt und stehen von diesem seitlich ab. Der Hauptvorteil der erfindungsgemäßen Lösung besteht darin, daß nun in der Flaschenwaschmaschine nur noch Antriebs- und Führungselemente für einen Strang vorgesehen werden müssen. Dies bedeutet einen wesentlich geringeren konstruktiven Aufwand.

Eine vorteilhafte Ausgestaltung der Erfindung sieht vor, daß die Aufnahmen in derselben Richtung von dem Transportelement abstehen, bzw. daß die Aufnahmen gleich lang sind. Diese Standardisierung bietet einmal Vorteile in konstruktiver Hinsicht, zum anderen wird so aber auch erreicht, daß die üblichen Füll- und Entleerungsvorrichtungen in den neuen Flaschenwaschmaschinen eingesetzt werden können.

Eine Abstützung des freien Endes der Aufnahme ist immer dann notwendig, wenn das einsträngige Transportelement die Aufnahmen alleine nicht mehr in seitlicher Ausrichtung halten kann, diese also aufgrund ihres-Eigengewichtes nach unten sinken würden. Ob und inwieweit eine Abstützung notwendig ist, hängt damit einerseits von dem Widerstand ab, den das Transportelement einem Verdrillen entgegensetzt, andererseits von der Länge und dem Gewicht der Aufnahmen.

Eine weitere vorteilhafte Ausgestaltung der Erfindung sieht vor, daß das einsträngige Transportelement ein Seil, insbesondere ein Stahlseil ist. Ein Seil ist einerseits relativ preiswert, andererseits läßt es sich in mehreren Ebenen verschwenken und kann daher möglicherweise besonders platzsparend in der Flaschenwaschmaschine geführt werden.

Eine weitere vorteilhafte Ausgestaltung der Erfindung sieht vor, daß das einsträngige Transportelement eine Kette ist, an deren Kettengliedern jeweils mindestens eine Aufnahme seitlich befestigt ist. Der Vorteil einer Kette besteht darin, daß sie stabil und in der vorhandenen Technik verfügbar und konstruktiv leicht beherrschbar ist.

Bei dieser Kette können die Glieder bezüglich zweier Achsen gegeneinander verschwenkt werden. Die Kette kann daher platzsparend in der Flaschenwaschmaschine geführt werden.

Es wird eine bezüglich einer Hoch- und einer Querachse verschwenkbare Kette (bei den Ausführungsformen mit schraubenförmiger Führung kann anstelle einer solchen Kette auch ein Seil verwendet werden) im Bereich mindestens eines Reinigungsbades schraubenförmig ab- bzw. aufsteigend geführt, wobei die Aufnahmen nach außen abstehen. Auf diese Weise lassen sich die Reinigungsbäder wesentlich besser ausnutzen als in herkömmlichen Flaschenwaschmaschinen, deren Ketten nur ein Verschwenken der Glieder bezüglich einer Achse erlaubten. Aufgrund der besseren räumlichen Ausnutzung der Reinigungsbäder kann man entweder die Flaschenanzahl erhöhen oder die Reinigungsbäder verkleinern. Um eine optimale Kraftübertragung zu gewährleisten, ist es allerdings notwendig, im Bereich der schraubenförmigen Führung Antriebsvorrichtungen für die Kette vorzusehen. Die Kette kann je nach Größe des Reinigungsbades auch über mehrere Schraubenführungen geführt werden.

Als Antriebsvorrichtung sind eine oder mehrere Zahnwalzen vorgesehen, deren Achsen parallel zu der Achse der Schraubenführung der Kette stehen. Die antreibbaren Zahnwalzen sind mit achsparallelen Mitnehmern, z.B. Rillen, versehen. Die Kette weist ihrerseits an der den Aufnahmen abgewandten Seite der Kettenglieder Vorsprünge auf. Die um die Zahnwalzen geführte Kette gerät mit ihren Vorsprüngen in in Umfangsrichtung der Zahnwalzen formschlüssigen und in deren Achsrichtung gleitenden Eingriff mit den Mitnehmern. Im Betrieb werden die Vorsprünge der Kettenglieder von den Mitnehmern in Umfangsrichtung der rotierenden Zahnwalzen bewegt, wobei die Vorsprünge entsprechend der Neigung der schraubenförmigen Kettenführung in den Mitnehmern auf- bzw. abgleiten. Ein derartiger Antrieb erlaubt die Übertragung großer Antriebskräfte, ohne daß die Kette in der Schraubenführung klemmen kann. Die Kette kann über eine zentral angeordnete Zahnwalze vom Durchmesser der Schraubenführung oder über eine oder mehrere kleine am Umfang der Schraubenführung angeordnete Zahnwalzen angetrieben werden.

Besonders vorteilhaft ist eine Ausgestaltung, bei der nur eine einzige Zahnwalze vorgesehen wird. Dadurch, daß der Antrieb im Bereich der schraubenförmigen Führung der Kette nur durch ein einziges Antriebselement gewährleistet wird, entfallen alle Probleme einer eventuellen Synchronisierung.

Für den Fall, daß die schraubenförmige Führung der Kette in teilweiser Umschlingung um zylindrische Antriebselemente verläuft, sind zwei weitere Varianten möglich. Die erste besteht darin, die Kette im Eingriffsbereich im Vollformschluß um das Antriebselement zu führen. Es kann dabei beispielsweise eine Kette in Vollformschlußeingriff mit Kettenrädern stehen, d.h. also ohne achsialen Schlupf, wie bei dem zuvor beschriebenen Antrieb mittels Zahnwalzen. Es ist dabei allerdings erforderlich, daß im Eingriffsbereich mit dem Antriebselement die Führung genau in einer Ebene senkrecht zur Achse des Antriebselementes geführt wird.

Die zweite vorteilhafte Variante sieht vor, daß die Kette im Reibschluß um achsparallele Zylinder geführt wird. Nur im Abstandsbereich zwischen den Zylindern sind der gewünschten Schraubenbahn entsprechend geneigte Führungen für die Kette vorgesehen. Ein Vorteil dieser Ausgestaltung besteht darin, daß an der Kette keine dem Antrieb dienenden Veränderungen, wie etwa die oben genannten Vorsprünge, vorgenommen werden müssen.

Die Möglichkeit einer schraubenförmigen Führung in der Flaschenwaschmaschine wird vorzugsweise durch eine als Transportelement dienende Kette eröffnet, deren Glieder anders als in gängigerweise eingesetzten Ketten nicht nur bezüglich einer, sondern bezüglich zweier Achsen gegeneinander verschwenkbar sind. Andererseits könnte es durchaus von Vorteil sein, Ketten vorzusehen, die bezüglich noch einer weiteren Achse eine Verschwenkung erlauben. In diesem Zusammenhang sieht eine weitere vorteilhafte Ausgestaltung der Erfindung vor, daß die Glieder der Kette gegeneinander verdrehbar sind. Eine derartige Kette könnte z.B. ein Umklappen der Aufnahmen von der einen auf die andere Kettenseite und damit ein besonders einfaches Umorientieren der Flaschen aus z.B. einer hängenden in eine Überkopfposition ermöglichen.

Die bislang beschriebenen Ausgestaltungen der erfindungsgemäßen Flaschenwaschmaschine beziehen sich alleine auf das Transportelement. Es ist darüber hinaus jedoch auch vorteilhaft, die Flaschenaufnahmen im Hinblick auf die speziellen Eigenschaften von Kunststoffflaschen auszubilden. Diese speziellen Eigenschaften sind, wie oben erwähnt, einmal das geringe Gewicht, andererseits die Tatsache, daß nahezu alle Kunststoffmehrwegflaschen im Bereich ihres Halses eine kragenförmige Ausstülpung aufweisen. Der Kragen ist erforderlich, damit die Kunststoffflaschen in automatischen Anlagen unter Druck abgefüllt werden können, ohne daß sie Schaden nehmen. Es bietet sich an, den Kragen auch anderweitig, insbesondere der Konzeption von Flaschenaufnahmen auszunutzen.

Eine weitere besonders vorteilhafte Ausgestaltung der Erfindung 13 bezieht sich daher auf eine Flaschenwaschmaschine für Kunststoffflaschen, die einen Halskragen aufweisen. Gemäß dieser Ausgestaltung werden an dem einsträngigen Transportelement seitlich abstehende Aufnahmen befestigt, die jeweils zwei langgestreckte beabstandete parallele Führungsschienen enthalten, in denen die Flaschen an ihrem Halskragen abgestützt aufgenommen werden. Im einfachsten Fall können diese Führungsschienen zwei parallele Stangen sein. Es liegt auf der Hand, daß derartige Aufnahmen besonders einfacher verwirklicht werden können und gegenüber üblichen, einzelne Flaschenzellen aufweisenden Flaschenkörben eine Reihe von Vorteilen besitzen. Ein Vorteil besteht z.B. darin, daß sie ein deutlich geringeres Gewicht haben. Ein weiterer Vorteil ist darin zu sehen, daß sie aufgrund ihres geringen Volumens nur wenig Wärme aus den aufgeheizten Bädern mitschleppen und wegen ihrer kleinen Flächen wenig Lauge verchleppen.

Eine weitere vorteilhafte Ausgestaltung der Erfindung betrifft insbesondere das Befüllen und Entleeren der aus zwei Führungsschienen bestehenden Flaschenaufnahmen. Bei dieser Ausgestaltung kann z.B. das Befüllen einfach dadurch geschehen, daß die Flaschen an dem mit der Öffnung versehenen Ende der Aufnahme nacheinander in die Führungsschienen eingesetzt und dann in Richtung des anderen Endes der Aufnahme geschoben werden, bis die Aufnahme gefüllt ist.

Eine weitere vorteilhafte Ausgestaltung der Erfindung sieht vor, daß jede Führungsschiene den Flaschenhals von unten und oben umgreift. Dies ist insbesondere dann vorteilhaft, wenn die Flaschen in der Flaschenwaschmaschine sowohl hängend als auch überkopf geführt werden sollen.

Aufnahmen mit auseinander bewegbaren Führungsschienen ermöglichen ein Entleeren auch an schwer zugänglichen Stellen der Flaschenwaschmaschine im Falle von z.B. Fehlfunktionen. Darüber hinaus kann man die Aufnahmen auch generell an den dafür vorgesehenen Stationen befüllen bzw. entleeren, indem man z.B. die Führungsschienen kurzfristig auseinanderbewegt, die Flaschen gemeinsam einsetzt und dann die Führungsschienen wieder zusammenführt, bzw. im Falle des Entleerens die Führungsschienen auseinanderführt und die Flaschen herausgleiten läßt.

In diesem Zusammenhang ist es weiterhin vorteilhaft, die Führungsschienen in Halterungen aufzunehmen, die sich senkrecht zu der durch Führungsschienen und Transportrichtung definierten Ebene erstrecken.

Eine weitere vorteilhafte Ausgestaltung der Erfindung sieht vor, daß die Halterung für jeweils mindestens eine der Führungsschienen um eine Achse parallel zur Aufnahme schwenkbar am Transportelement gelagert ist.

Besonders vorteilhaft ist eine Ausgestaltung, bei der die jeweils schwenkbare Halterung von Rückstellfedern gegen einen Anschlag gehalten wird, der einen Minimalabstand der Führungsschienen zueinander begrenzt. Hier ist es z.B. beim Entleeren der Aufnahmen nur notwendig, die Halterungen gegen die Federkraft zu verschwenken und so die Führungsschienen auseinanderzubewegen. Nach Beendigung der Operation nehmen die Führungsschienen dann automatisch wieder die Betriebsposition ein.

Im folgenden soll die Erfindung anhand einiger Ausführungsbeispiele mit Hilfe von Zeichnungen näher erläutert werden.
- Fig. 1: zeigt eine perspektivische Teilansicht des Transportelementes gemäß einem Ausführungsbeispiel der Erfindung.
- Fig. 2: zeigt eine Draufsicht auf das Transportelement mit daran befestigten Aufnahmen gemäß eines weiteren Ausführungsbeispieles der Erfindung.
- Fig. 3: zeigt eine Seitenansicht eines Kettengliedes des Transportelementes mit daran angeordneter Flaschenaufnahme.
- Fig. 4: zeigt einen Schnitt durch ein Reinigungsbad, in dem das Transportelement schraubenförmig geführt ist.
- Fig. 5: zeigt im Schnitt durch eine der in Fig. 3 nur skizzierten Zahnwalzen den Funktionsmechanismus des Kettenantriebes.
- Fig. 6: schließlich zeigt die schematische Ansicht eines Reinigungsbades eines weiteren Ausführungsbeispieles der Erfindung.

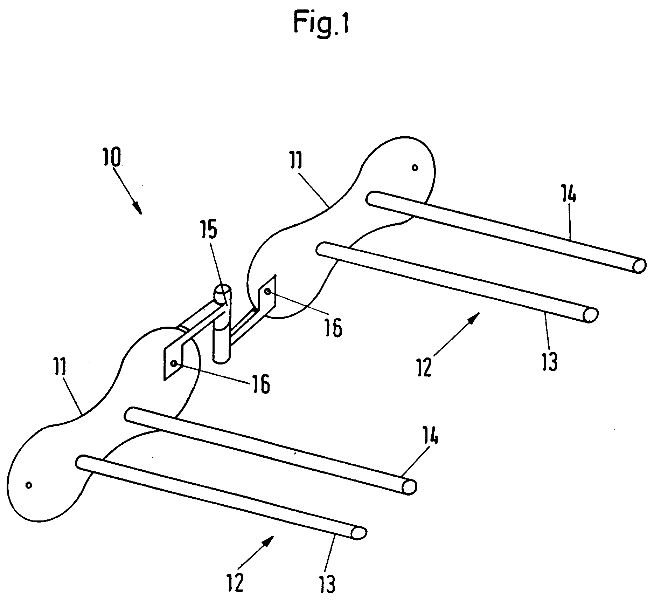

In Fig. 1 erkennt man ein einsträngiges, in Form einer Kette ausgebildetes Transportelement 10, an dessen einzelnen Gliedern 11 Flaschenaufnahmen 12 angeordnet sind. Die Flaschenaufnahmen 12 bestehen jeweils aus zwei als Führungsschienen dienenden Stangen 13, 14, die seitlich von den Kettengliedern 11 abstehend mit jeweils ihrem einen Ende daran befestigt sind. Die Kettenglieder 11 sind ihrerseits über ein Scharnier 15 miteinander verbunden, das ein relatives Verschwenken der Glieder um eine Achse senkrecht zu den Aufnahmen 12 ermöglicht. Das Scharnier 15 ist weiterhin über Bolzen 16 an den Kettengliedern 11 angelenkt, die damit auch bezüglich einer Achse parallel zu den Aufnahmen 12 gegeneinander verschwenkbar sind.

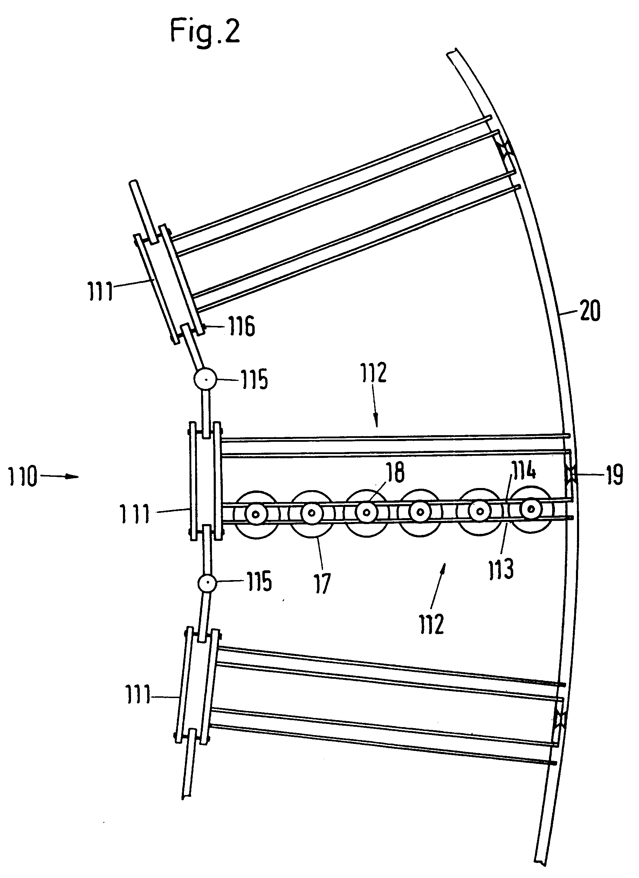

Ein ähnliches Transportelement 110 zeigt Fig. 2. Auch hier ist das Transportelement 110 eine Kette, deren Glieder 111 über Scharniere 115 miteinander verbunden sind. Die Scharniere 115 sind weiterhin über Bolzen 116 beweglich an den Gliedern 111 gelagert. Jedes Kettenglied 111 trägt zwei Flaschenaufnahmen 112 mit parallelen Führungsschienen 113, 114. Zwischen den Führungsschienen 113, 114 sind Flaschen 17 an ihrem Halskragen 18 abgestützt aufgenommen. Die äußeren Enden der Führungsschienen 113, 114 der Aufnahmen 112 tragen eine gemeinsame Stützrolle 19. Die Stützrolle 19 liegt auf einem in der Flaschenwaschmaschine vorgesehenen Leitelement 20 auf, das zumindest bereichsweise in der Flaschenwaschmaschine ausgebildet und dort parallel zu dem Transportelement 110 geführt ist.

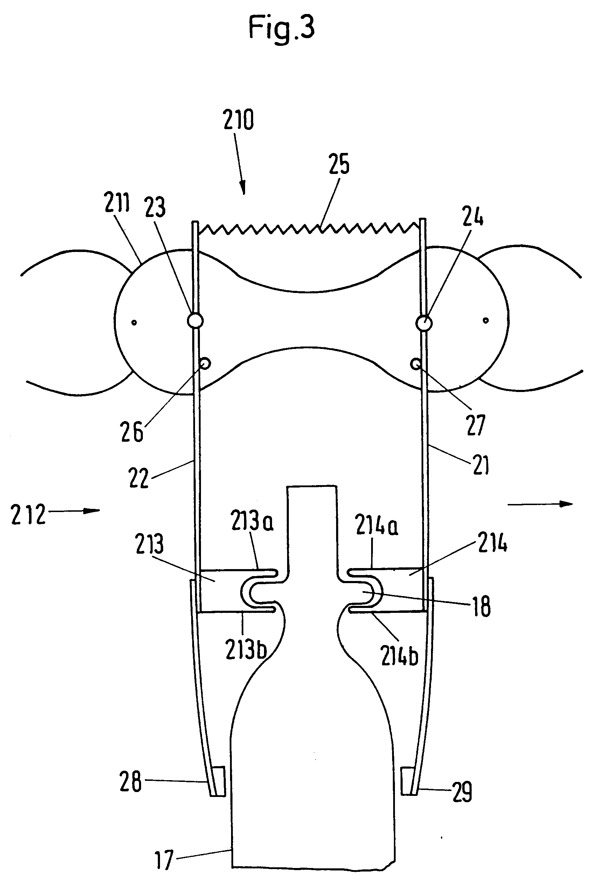

Fig. 3 zeigt nun in einer seitlichen Ansicht eines Kettengliedes 211 einer konventionellen als Transportelement 210 dienenden Kette ein anderes Ausführungsbeispiel 212 der Flaschenaufnahme. Die Aufnahme 212 enthält Führungsschienen 213, 214, die den Halskragen 18 der Flasche 17 jeweils mit zwei beabstandeten Stegen 213a, 213b und 214a, b von oben und unten umgreifen. Der Flaschenkragen 18 wird damit beidseitig abgestützt, was bei Ausrichtung der Flaschen 17 überkopf ein unkontrolliertes Verrutschen bzw. Umkippen verhindert. Die Führungsschienen 213, 214 sind weiterhin an Halterungen 21, 22 befestigt, die ihrerseits in Punkten 23 und 24 auf dem Kettenglied verschwenkbar aufgenommen sind. Die freien Enden der Halterungen 21, 22 sind über eine Druckfeder 25 gegeneinander kraftbeaufschlagt. Anschläge 26, 27 auf dem Kettenglied 211 sorgen schließlich dafür, daß die Druckfeder 25 die Halterungen 21, 22 nur in einem definierten Bereich bewegen kann.

An den Halterungen 21, 22 sind unterhalb der Führungsschienen 213, 214 und parallel dazu verlaufende Abstützvorrichten 28, 29 angeordnet, die die Flaschen 17 im Bereich des Flaschenkörpers seitlich abstützen und so ein Pendeln in der durch Pfeil angedeuteten Transportrichtung verhindern. Die Abstützvorrichtungen 28, 29 können auch unmittelbar an den Kettengliedern 211 befestigt sein.

Verschwenkt man die Halterungen 21, 22 gegen die Druckfeder 25, so werden die Führungsschienen 213, 214 am anderen Ende der Halterungen auseinanderbewegt und die zwischen ihnen abgestützten Flaschen 17 fallen heraus. Dies ist einmal sinnvoll für den Fall, daß die Flaschen 17 während des Betriebes an unzugänglichen Stellen der Flaschenwaschmaschine aus den Aufnahmen 212 entfernt werden müssen. Andererseits ist es aber auch denkbar, generell das Befüllen und Entleeren der Flaschenaufnahmen 212 durch ein kurzfristiges Auseinander- und dann wieder Zusammenführen der Führungsschienen vorzunehmen.

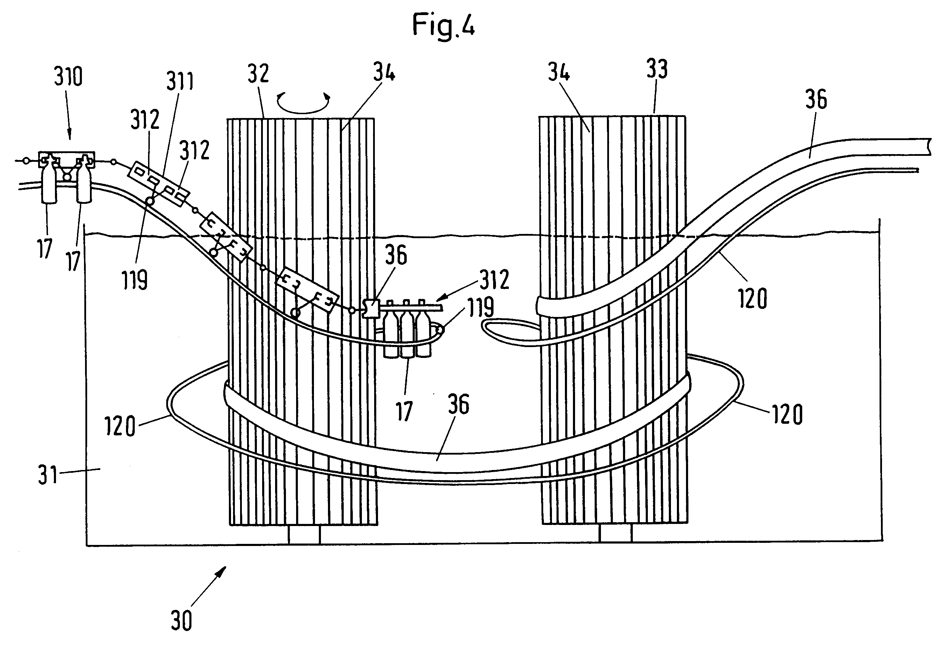

Fig. 4 zeigt nun schematisch ein vorteilhaftes Ausführungsbeispiel, das durch den Einsatz eines einsträngigen Transportelementes in Verbindung mit seiner Schwenkbarkeit bezüglich mehrerer Achsen ermöglicht wird. Dargestellt ist ein mit Flüssigkeit 31 gefülltes Reinigungsbad 30. Im Innern des Bades 30 sind zwei in nicht dargestellter Weise angetriebene Zahnwalzen 32, 33 mit achsparallelen, rillenförmigen Mitnehmern 34 angeordnet. Ein Transportelement 310 wird auf einer schematisch angedeuteten, von nicht dargestellten Stützen gehaltenen Führung 36 über die linke Zahnwalze 32 schraubenförmig in das Reinigungsbad 30 hinabgeführt, gelangt dann zu der rechten Zahnwalze 33, die das Transportelement 310 wieder aufsteigend aus dem Reinigungsbad 30 herausführt.

Das Transportelement 310 ist nur schematisch dargestellt. Auch in diesem Fall soll es sich um eine Kette mit einzelnen, nur im linken oberen Bereich dargestellten Gliedern 311 handeln. Man erkennt, daß jedes Kettenglied 311 zwei Aufnahmen 312 für Flaschen 17 trägt. Die benachbarten Aufnahmen 312 auf einem Kettenglied 311 tragen ein gemeinsames Stützrad 119, das auf einem Leitelement 120 abgestützt gleitet. Das durch nicht dargestellte Stützen gehaltene Leitelement ist in konstantem Abstand parallel zu dem Transportelement 310 angeordnet.

In dieser Abbildung ist aus Übersichtlichkeitsgründen die Führung des Transportelementes 310 nur mit 36 angedeutet. Alle weiteren notwendigen Führungsvorrichtungen wurden weggelassen. Die Führung des Transportelementes kann in beliebiger Weise über Rollen, Schienen etc. erfolgen. Der Vortrieb des kettenförmigen Transportelementes 310 erfolgt mittels der um ihre Achse rotierenden Zahwalzen 32, 33.

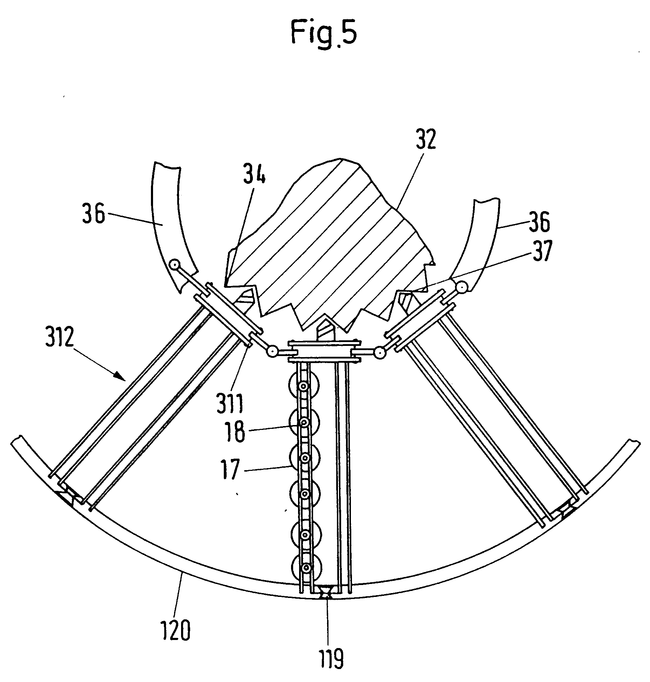

Wie dies im einzelnen geschieht, zeigt Abbildung 5. Man erkennt, daß das hier im Detail gezeigte Transportelement 310 auf der den Aufnahmen 312 abgewandten Seite seiner Kettenglieder 311 Vorsprünge 37 trägt. Die Vorsprünge 37 sind in Eingriff mit den Mitnehmern 34 der im Schnitt dargestellten Zahnwalze 32 aus Fig. 4. Man erkennt, daß die Vorsprünge 37 in Umfangsrichtung der Zahnwalze 32 in formschlüssigem Eingriff mit den Mitnehmern 34 stehen, während sie in Richtung der Achse der Zahnwalze 32 auf- und abgleiten können. Bei einer Drehung der Zahnwalze 32 werden die Kettenglieder also in Umfangsrichtung mit der Zahnwalze 32 gedreht, während sie in Abhängigkeit von der gewünschten Schraubenbahn sich gleitend nach oben oder nach unten bewegen.

In einer nicht dargestellten alternativen Ausführungsform können, wenn man Fig. 5 betrachtet, anstelle der einen zentralen Zahnwalze 32 die mit ihrem Umfang im wesentlichen auf dem Radius der die Kettenglieder 311 führenden Führung 36 liegt, eine oder mehrere kleinere Zahnwalzen vorgesehen sein, die die Länge der Zahnwalze 32 haben, jedoch einen wesentlich kleineren Umfang, und die derart ausgebildet sind, daß sie beim Vorbeilaufen der Kette immer nur mit einem oder mit zwei benachbarten Kettengliedern 311 in Eingriff stehen.

Zurückkommend auf Fig. 4 ist anzumerken, daß in einer Variante anstelle zweier Zahnwalzen 32, 33 mit jeweiliger schraubenförmiger Umschlingung durch das Transportelement 310 auch bei einem kleineren Bad nur eine Zahnwalze vorgesehen sein kann. An dieser läuft das Transportelement dann beispielsweise abwärts wie gemäß Fig. 4 bei der Zahnwalze 32. Anschließend kann das Transportelement dann nach oben umgelenkt und direkt, also ohne Vermittlung einer weiteren Zahnwalze, aus dem Bad herausgeführt werden.

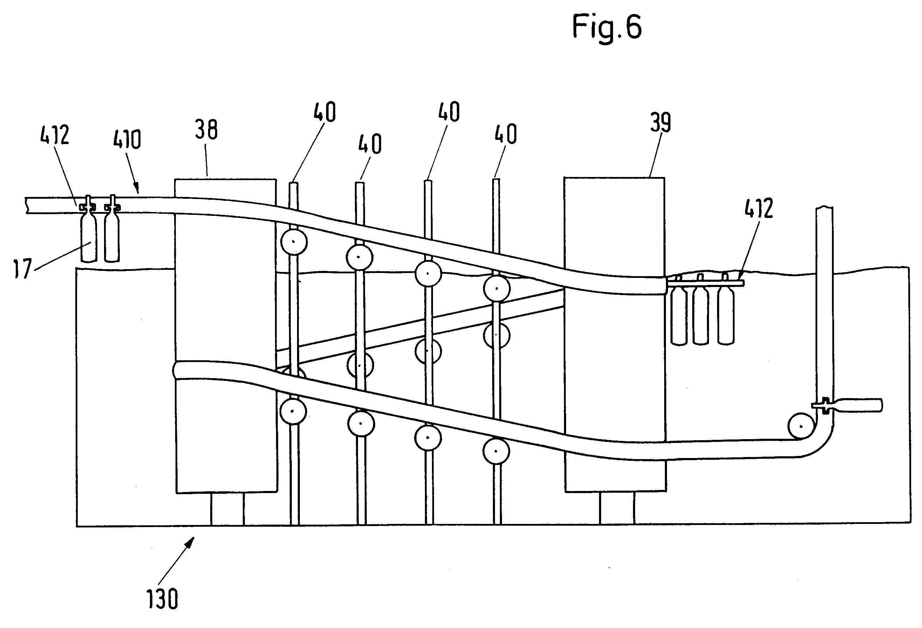

Fig. 6 schließlich zeigt in ähnlicher Weise wie Fig. 4 eine Ansicht eines Reinigungsbades 130. In dem Reinigungsbad 130 sind zwei parallele glatte zylinderförmige Walzen 38, 39 angeordnet, die in nicht dargestellter Weise angetrieben sind. Ein nur schematisch angedeutetes Transportelement 410, das z.B. eine Kette sein kann, ist in einer ellipsoidförmigen Schraubenbahn um beide Walzen 38, 39 absteigend in das Reinigungsbad 130 geführt. Auch an diesem Transportelement 410 sind seitlich abstehende Aufnahmen 412 befestigt, die die Flaschen 17 tragen. Das Transportelement 410 wird von den Zylindern 38, 39 im Reibschluß bewegt. Im Abstandsbereich zwischen den beiden zylinderförmigen Walzen sind Rollenführungen 40 für das Transportelement 410 vorgesehen.

Bei dieser Ausbildung des Antriebes läuft das Transportelement 410 jeweils in 180°-Umschlingung um die Walzen 38 und 39, wobei es im Umschlingungsbereich in einer Ebene läuft, die genau senkrecht zur Achse der Walzen 38, 39 steht. Daher läuft das Transportelement 410 auf den Walzen sozusagen "geradeaus", also ohne Schlupf in Richtung der Walzenachsen, wie bei der Ausführungsform der Fig. 4.

Eine Schrägführung zur Überwindung des Höhenunterschiedes ist bei dieser Ausführungsform nur zwischen den Walzen vorgesehen, bei denen Führungsabschnitte dafür sorgen, daß das Transportelement 410 in diesem Bereich schräg geführt wird. Diese Schrägführungen zwischen den Walzen 38, 39 sind als Rollenführungen 40 angedeutet, wobei die dargestellten Rollen mit den dargestellten Stützen auf Höhe gehalten sind.

Die Ausführungsform der Fig. 6 zeigt, daß ein Transportelement auf einer Antriebswalze auch ohne Achsialschlupf geführt werden kann. Es können also anstelle der glatten Walzen auch jeweils an den Stellen, in denen das Transportelement 410 mit den Walzen 38 und 39 in Reibschluß steht, Kettenräder angeordnet sein. Im Falle der Fig. 6 würde also jede der Walzen 38, 39 durch nur ein Kettenrad ersetzt werden können.

Im Ausführungsbeispiel der Fig. 6 wird jede der Walzen 38, 39 nur einmal von dem Transportelement 410 um 180° umschlungen. Sinnvoller ist es natürlich, zur verbesserten räumlichen Ausnutzung des Reinigungsbades 130, wenn die Flaschen in der Höhe eng übereinander im Reinigungsbad geführt werden. Man könnte also gemäß Fig. 6 die Windungen des Transportelementes 410 um die Walzen in der Höhe enger zusammenrücken und würde auf den dargestellten Walzen beispielsweise die dreifache Länge des Transportelementes unterbringen können, wobei sich auf jeder Walze drei Umschlingungen ergeben würden. Der Neigungswinkel, unter dem das Transportelement an den Rollenführungen 40 abwärts geführt wird, würde sich dann entsprechend verringern.

## Patentansprüche

1. Flaschenwaschmaschine für Flaschen aus Kunststoff, mit einem endlos umlaufenden Transportelement, das die zu reinigenden Flaschen durch Reinigungsbäder hindurch bzw. an Reinigungsvorrichtungen vorbeiführt, wobei die Flaschen in langgestreckten, mit ihrem einen Ende, seitlich abstehend am Transportelement befestigten Aufnahmen angeordnet sind, **dadurch gekennzeichnet**, daß das Transportelement (10, 110, 210, 310, 410) nur einen Strang aufweist, daß die Aufnahmen (112, 312) im Bereich ihres freien Endes mit Roll- bzw. Gleitstützen (19, 119) versehen sind, und zumindest in Bereichen der Flaschenwaschmaschine eine parallel zum Transportelement (110, 310) verlaufendes Leitelement (20, 120) für die Roll- bzw. Gleitstützen (19, 119) vorgesehen ist und daß das Transportelement entweder ein Seil, insbesondere ein Stahlseil oder eine Kette ist, wobei jeweils eine oder mehrere Aufnahmen (12, 112, 212, 312) mit allen ihren Befestigungspunkten seitlich an einem Kettenglied (11, 111, 211, 311) angeordnet sind und die Glieder (11, 111, 311) der Kette bezüglich einer senkrecht zu der durch Kette und Aufnahmen definierten Ebene stehenden Hochachse und einer in dieser Ebene quer zur Kette stehenden Querachse verschwenkbar aneinander gelagert sind.

2. Flaschenwaschmaschine nach Anspruch 1, **dadurch gekennzeichnet,** daß alle Aufnahmen (12, 112, 212, 312, 412) in derselben Richtung vom Transportelement (10, 110, 210, 310, 410) abstehen.

3. Flaschenwaschmaschine nach einem der vorhergehenden Ansprüche, **dadurch gekennzeichnet**, daß die Aufnahmen (12, 112, 212, 312, 412) gleich lang sind.

4. Flaschenwaschmaschine nach einein der Ansprüche 1 bis 3, **dadurch gekennzeichnet**, daß das Transportelement (310) im Bereich mindestens eines Reinigungsbades (30, 130) im wesentlichen schraubenförmig auf- bzw. absteigend geführt ist, wobei die Aufnahmen (312, 412) nach außen abstehen und im Bereich der schraubenförmigen Führung Antriebsvorrichtungen (32, 33, 38, 39) für die Kette vorgesehen sind.

5. Flaschenwaschmaschine nach Anspruch 4, **dadurch gekennzeichnet**, daß die Antriebsvorrichtungen mindestens eine zur Schraubenachse parallel ausgerichtete, mit achsparallelen Mitnehmern (34) versehene, antreibbare Zahnwalze (32, 33) aufweist und an der den Aufnahmen abgewandten Seite des Transportelementes (310) Vorsprünge (37) vorgesehen sind, die in in Umfangsrichtung der Zahnwalze (32, 33) formschlüssigen und in deren Achsrichtung gleitenden Eingriff mit den Mitnehmern (34) bringbar sind.

6. Flaschenwaschmaschine nach Anspruch 5, **dadurch gekennzeichnet**, daß die Achse der Zahnwalze (32, 33) mit der Schraubenachse zusammenfällt.

7. Flaschenwaschmaschine nach Anspruch 6, **dadurch gekennzeichnet**, daß das Transportelement (410) im Reibschluß oder Vollformschluß um wenigstens zwei synchron antreibbare achsparallele Zylinder (38, 39) geführt ist, wobei nur im Abstandsbereich zwischen den Zylindern (38, 39) der gewünschten Schraubenbahn entsprechend geneigte Führungen (40) für die Kette vorgesehen sind.

8. Flaschenwaschmaschine nach einem der vorhergehenden Ansprüche, **dadurch gekennzeichnet**, daß die Glieder der Kette um eine in Kettenrichtung erstreckte Längsachse gegeneinander drehbar aneinander gelagert sind.

9. Flaschenwaschmaschine nach einem der Ansprüche 1 - 8 für Kunststoffflaschen, die einen Halskragen besitzen, **dadurch gekennzeichnet**, daß als Aufnahmen (12, 112, 212, 312, 412) jeweils zwei langgestreckte beabstandete parallele Führungsschieinen (13, 14; 113, 114; 213, 214) vorgesehen sind, die die Flaschen (17) an ihrem Halskragen (18) in zwei gegenüberliegenden Bereichen abgestützt, verschiebbar aufnehmen.

10. Flaschenwaschmaschine nach Anspruch 9, **dadurch gekennzeichnet**, daß jede Aufnahme an mindestens einem Ende eine Öffnung zum Einsetzen der Flaschen in die Führungsschienen aufweist.

11. Flaschenwaschmaschine nach einem der Ansprüche 9 oder 10, **dadurch gekennzeichnet**, daß die Führungsschienen 213, 214) jeweils zwei parallele beabstandete Stege (213a,b; 214a,b) aufweisen, die den Flaschenkragen (18) von oben und unten umgreifen.

12. Flaschenwaschmaschine nach einem der Ansprüche 9 - 11, **dadurch gekennzeichnet**, daß die Führungsschienen (213, 214) durch Verschieben mindestens einer Schiene auseinander bewegbar sind.

13. Flaschenwaschmaschine nach einem der Ansprüche 9 - 12, **dadurch gekennzeichnet**, daß die Führungsschienen (213, 214) in Halterungen (21, 22) aufgenommen sind, die sich senkrecht zu der durch Führungsschienen (213, 214) und Transportrichtung definierten Ebene erstrecken.

14. Flaschenwaschmaschine nach Anspruch 13, **dadurch gekennzeichnet**, daß die Halterung (21, 22) für jeweils mindestens eine der Führungsschienen (213, 214) um eine Achse (23, 24) parallel zur Aufnahme (212) schwenkbar am Transportelement (210) gelagert ist.

15. Flaschenwaschmaschine nach Anspruch 14, **dadurch gekennzeichnet**, daß jeweils die schwenkbaren Halterungen (21, 22) voll Rückstellfedern (25) gegen einen Minimalabstand der Führungsschienen (213, 214) begrenzende Anschläge (26, 27) gehalten sind.

## Claims

1. Bottle washing machine for plastic bottles with an endless rotating transport element which conducts the bottles to be cleaned through cleaning baths or past cleaning devices, the bottles being arranged in elongate holders fastened at one end to and laterally protecting from the transport element, characterised in that the transport element (10, 110, 210, 310, 410) has only one track, that the holders (112, 312) are provided in the region of their free end with rolling or sliding supports (19, 119) and, at least in regions of the bottle washing machine, a guide element (20, 120) extending parallel to the transport element (110, 310) for the rolling or sliding supports (19, 119) is provided and that the transport element is either a rope, particularly a steel rope, or a chain, whereby one or more holders (12, 112, 212, 312) are arranged with all their fastening points laterally on each chain link (11, 111, 211, 311) and the links (11, 111, 311) of the chain are mounted to be pivotable on one another with respect to a vertical axis extending perpendicular to the plane defined by the chain and holders and a transverse axis extending in this plane transverse to the chain.

2. Bottle washing machine as claimed in Claim 1, characterised in that all the holders (12, 112, 212, 312, 412) project in the same direction from the transport element (10, 110, 210, 310, 410).

3. Bottle washing machine as claimed in one of the preceding claims, characterised in that the holders (12, 112, 212, 312, 412) are of the same length.

4. Bottle washing machine as claimed in one of Claims 1 to 3, characterised in that the transport element (310) is guided to ascend or descend on a substantially helical path in the region of at least one cleaning bath (30, 130), the holders (312, 412) projecting outwardly and drive devices (32, 33, 38, 39) for the chain being provided in the region of the helical guide.

5. Bottle washing machine as claimed in Claim 4, characterised in that the drive devices have at least one drivable toothed roller (32, 33), which is provided with axially parallel engaging portions (34) aligned parallel to the axis of the helix and provided on the side of the transport element (310) remote from the holders are projections (37) which are movable into an engagement with the engaging portions (34) which is form-locking in the peripheral direction of the toothed roller (32, 33) and sliding in its axial direction.

6. Bottle washing machine as claimed in Claim 5, characterised in that the axis of the toothed roller (32, 33) is coincident with the axis of the helix.

7. Bottle washing machine as claimed in Claim 6, characterised in that the transport element (410) is guided in frictional engagement or in full form-locking engagement around at least two synchronously drivable, axially parallel cylinders (38, 39), inclined guides (40) for the chain corresponding to the desired helical path being provided only in the space between the cylinders (38, 39).

8. Bottle washing machine as claimed in one of the preceding claims, characterised in that the links of the chain are mounted on one another to be rotatable with respect to one another about a longitudinal axis extending in the direction of the chain.

9. Bottle washing machine as claimed in one of Claims 1-8 for plastic bottles which have a throat collar, characterised in that two respective elongate, spaced, parallel guide rails (13, 14; 113, 114; 213, 214) are provided as each holder (12, 112, 212, 312, 412) which slidably support the bottles (17) at their throat collar (18) in two opposed regions.

10. Bottle washing machine as claimed in Claim 9, characterised in that each holder has an opening for inserting the bottles into the guide rails at at least one end.

11. Bottle washing machine as claimed in one of Claims 9 or 10, characterised in that the guide rails (213, 214) have two parallel, spaced webs (213a, b; 214a, b) which engage the throat collar (18) from above and below.

12. Bottle washing machine as claimed in one of Claims 9-11, characterised in that the guide rails (213, 214) may be moved apart by displacing at least one rail.

13. Bottle washing machine as claimed in one of Claims 9-12, characterised in that the guide rails (213, 214) are mounted in supports (21, 22) which extend perpendicular to the plane defined by the guide rails (213, 214) and the transport direction.

14. Bottle washing machine as claimed in Claim 13, characterised in that the support (21, 22) for at least one of the guide rails (213, 214) is mounted to be pivotable on the transport element (210) about an axis (23, 24) parallel to the holder (212).

15. Bottle washing machine as claimed in Claim 14, characterised in that the pivotable supports (21, 22) are held by return springs (25) against abutments (26, 27) defining a minimum spacing of the guide rails (213, 214).

## Revendications

1. Machine de lavage de bouteilles en matière plastique équipée d'un élément de transport circulant sans fin qui conduit les bouteilles à nettoyer à travers un bain de nettoyage ou le long de dispositifs de nettoyage, les bouteilles étant disposées dans des supports allongés fixés par l'une de leurs extrémités à l'élément de transport dont ils s'écartent latéralement, caractérisée en ce que l'élément de transport (10, 110, 210, 310, 410) ne comporte qu'un seul conducteur, et que les porte-bouteilles (112, 312) sont munis au niveau de leur extrémité libre de galets d'appuis ou de pièces d'appui coulissantes (19, 119), et qu'un élément de guidage (20, 120) pour les galets d'appuis ou pièces d'appui coulissantes (19, 119) équipe au moins certaines sections de la machine de lavage de bouteilles parallèlement à l'élément de transport (110, 310), et que l'élément de transport est constitué soit par un câble, et plus particulièrement un câble d'acier, soit par une chaîne, un ou plusieurs porte-bouteilles (12, 112, 212, 312) étant fixés latéralement par tous leurs points de fixation à un maillon (11, 111, 211, 311), et les maillons (11, 111, 311) de la chaîne étant logés de façon à pouvoir pivoter l'un par rapport à l'autre selon un axe normal à un plan défini par la chaîne et les porte-bouteilles et selon un axe situé dans ce plan et transversal par rapport à la chaîne.

2. Machine de lavage de bouteilles selon la revendication 1, **caractérisée en ce que** tous les porte-bouteilles (12, 112, 212, 312, 412) s'écartent dans le même sens de l'élément de transport (10, 110, 210, 310, 410).

3. Machine de lavage de bouteilles selon l'une des revendications précédentes, **caractérisée en ce que** les porte-bouteilles (12, 112, 212, 312, 412) sont tous de même longueur.

4. Machine de lavage de bouteilles selon l'une des revendications 1 à 3, **caractérisée en ce que** l'élément de transport (310) soit guidé selon un parcours essentiellement hélicoïdal ascendant ou descendant dans au moins un bain de nettoyage (30, 130), les porte-bouteilles (312, 412) s'écartant vers l'extérieur, et que des dispositifs d'entraînement (32, 33, 38, 39) sont prévus au moins dans la zone de guidage hélicoïdal pour entraîner la chaîne.

5. Machine de lavage de bouteilles selon la revendication 4, **caractérisée en ce que** les dispositifs d'entraînement comportent au moins un tambour denté pouvant être entraîné (32, 33) parallèle à l'axe de l'hélice et muni d'entraîneurs (34) parallèles à son axe de rotation, et que le côté de l'élément de transport (310) opposé aux porte-bouteilles comporte des saillies (37) pouvant s'engager positivement dans les entraîneurs (34) à la périphérie du tambour denté (32, 33) et y coulisser dans le sens axial.

6. Machine de lavage de bouteilles selon la revendication 5, **caractérisée en ce que** l'axe du tambour denté (32, 33) coïncide avec l'axe de l'hélice.

7. Machine de lavage de bouteilles selon la revendication 6, **caractérisée en ce que** l'élément de transport (410) est entraîné par friction ou par engagement positif autour d'au moins deux cylindres (38, 39) d'axes parallèles et pouvant être entraînés en rotation synchrone, des guides (40) inclinés en fonction de la trajectoire hélicoïdale souhaitée n'étant prévus que dans la zone d'écartement des cylindres (38, 39).

8. Machine de lavage de bouteilles selon l'une des revendications précédentes, **caractérisée en ce que** les maillons de la chaîne sont logés de façon à pouvoir pivoter l'un par rapport à l'autre autour de l'axe longitudinal de la chaîne.

9. Machine de lavage de bouteilles selon l'une des revendications 1 à 8 pour bouteilles en matière plastique dont le col est muni d'une collerette, **caractérisée en ce que** les porte-bouteilles (12, 112, 212, 312, 412) sont constitués de deux guides allongés parallèles (13, 14; 113, 114; 213, 214) avec un certain écart et servant de logement coulissant aux collerettes (18) des bouteilles (17) qui s'y appuient en deux points diamétralement opposés.

10. Machine de lavage de bouteilles selon la revendication 9, **caractérisée en ce que** chaque porte-bouteilles est muni à l'une au moins de ses extrémités d'une ouverture permettant l'insertion des bouteilles entre les guides.

11. Machine de lavage de bouteilles selon l'une des revendications 9 ou 10, **caractérisée en ce que** les guides (213, 214) présentent chacun deux traverses parallèles (213a,b; 214a,b) écartées l'une de l'autre qui maintiennent la collerette (18) par au-dessus et par en-dessous.

12. Machine de lavage de bouteilles selon l'une des revendications 9 à 11, **caractérisée en ce que** les guides (213, 214) peuvent être écartés par le déplacement d'au moins l'un d'entre eux.

13. Machine de lavage de bouteilles selon l'une des revendications 9 à 12, **caractérisée en ce que** les guides (213, 214) sont maintenues par des attaches (21, 22) qui s'étendent verticalement par rapport au plan défini par les guides et le sens de transport.

14. Machine de lavage de bouteilles selon la revendication 13, **caractérisée en ce que** l'attache (21, 22) de l'un au moins des guides (213, 214) est logée contre l'élément de transport (210) de façon à pouvoir pivoter autour d'un axe parallèle au porte-bouteilles (212).

15. Machine de lavage de bouteilles selon la revendication 14, **caractérisée en ce que** celles des attaches (21,22) pouvant pivoter sont maintenues par des ressorts de rappel (25) contre des butées (26, 27) assurant un écart minimum entre les guides (213, 214).
